# EUROPEAN PATENT SPECIFICATION

(11) **EP 1 783 165 B1**
(45) Date of publication and mention of the grant of the patent: **19.10.2011**
(21) Application number: 05768463.1
(22) Date of filing: 03.08.2005
(51) Int. Cl.: C08L 9/00, C08K 3/36, C08K 5/00, B60C 1/00, C08K 5/09, C08L 15/00, C08L 19/00

(54) **RUBBER COMPOSITION AND TIRE**
KAUTSCHUKZUSAMMENSETZUNG UND REIFEN
COMPOSITION DE CAOUTCHOUC ET PNEU

(30) Priority: 10.08.2004 JP 2004233240
(43) Date of publication of application: 09.05.2007
(73) Proprietor: JSR Corporation, Tokyo 104-8410 (JP)
(72) Inventor: KOBAYASHI, Naokazu, JSR CORPORATION, Tokyo 1048410 (JP); UDAGAWA, Yoshiyuki, JSR CORPORATION, Tokyo 1048410 (JP); TADAKI, Toshihiro, JSR CORPORATION, Tokyo 1048410 (JP)
(74) Representative: TBK
(86) International application number: PCT/JP2005/014232
(87) International publication number: WO 2006/016512

(56) References cited:
- EP-A- 0 644 235
- EP-A- 1 479 698
- EP-A- 1 484 359
- JP-A- 11 071 479
- JP-A- 2000 344 944
- JP-A- 2001 106 830
- JP-A- 2001 106 830
- JP-A- 2001 114 939
- JP-A- 2001 158 835
- JP-A- 2002 275 311
- JP-A- 2004 051 869
- JP-A- 2004 051 869

## Description

### TECHNICAL FIELD

The present invention relates to a rubber composition and a tire using the rubber composition. In particular, the present invention relates to a rubber composition which exhibits excellent scorching properties before vulcanization and exhibits excellent rolling resistance and wet skid properties after vulcanization, and a tire using the rubber composition.

### BACKGROUND ART

In order to deal with a recent demand for a reduction in fuel consumption of automobiles, conjugated diene rubber which exhibits low rolling resistance and excellent abrasion resistance and breaking properties and ensures handling stability represented by wet skid resistance has been desired as a rubber tire material.

The rolling resistance of a tire may be reduced by reducing the hysteresis loss of vulcanized rubber. As vulcanized rubber evaluation indices, impact resilience at 50 to 80°C, tanδ at 50 to 80°C, Goodrich heat buildup, and the like are used. A rubber material is preferable which exhibits a high impact resilience at 50 to 80°C or exhibits a small tanδ at 50 to 80°C or a small Goodrich heat buildup.

As a rubber material with a low hysteresis loss, natural rubber, polyisoprene rubber, polybutadiene rubber, and the like have been known. However, these rubber materials exhibit poor wet skid resistance.

As a method of reducing hysteresis loss without impairing wet skid resistance, a method has been proposed which introduces a functional group to the polymer terminal of a styrene-butadiene copolymer which is polymerized in a hydrocarbon solvent using an organolithium initiator and has various structures. For example, a styrene-butadiene copolymer obtained by modifying or coupling the polymer terminal with a tin compound (see Patent Document 1) and a styrene-butadiene copolymer obtained by modifying the polymer terminal with an isocyanate compound (see Patent Document 2) have been known. These modified polymers exhibit a reduced hysteresis loss and excellent abrasion resistance and breaking properties without showing reduced wet skid resistance particularly when using a composition containing carbon black as a reinforcing agent.

In recent years, a method has been proposed in which a rubber composition containing silica or a mixture of silica and carbon black as a reinforcing agent is used as a tire rubber material. A tire tread formed using silica or a mixture of silica and carbon black exhibits low rolling resistance and provides excellent handling stability performance represented by wet skid resistance. On the other hand, a vulcanizate thereof exhibits a low tensile strength and abrasion resistance. The above modified styrene-butadiene copolymer provides a tire rubber material which exhibits excellent abrasion resistance and breaking properties when using a composition containing carbon black as a reinforcing agent, but exhibits poor improvement effects when using a composition containing silica as a reinforcing agent.

In order to improve the tensile strength and the abrasion resistance of a vulcanizate formed containing silica or a mixture of silica and carbon black, a rubber composition containing a polymer into which a functional group having affinity with silica is introduced has been proposed. For example, a method of producing a polymer by reacting silicon tetrahalide, trihalosilane, or the like has been proposed (see Patent Document 3). A method of producing a polymer modified with a halogenated silane compound has been disclosed (see Patent Document 4). Diene rubber into which an alkylsilyl group or a halogenated silyl group is introduced has been disclosed (see Patent Documents 5 and 6). Diene rubber into which a tertiary amino group and an alkoxysilyl group are introduced has been disclosed (see Patent Document 7). It has also been disclosed that a rubber composition containing a rubber polymer, a primary amine compound having tertiary carbon, an inorganic filler, and a silane coupling agent exhibits a low hysteresis loss and improved wet skid properties without showing reduced abrasion resistance and breaking properties (see Patent Document 8).

Properties are improved to some extent by using the above modified polymer in a composition containing silica or a mixture of silica and carbon black. However, a rubber composition which exhibits excellent scorching properties, rolling resistance, and wet skid resistance has not yet been obtained.
[Patent Document 1] JP-A-57-55912
[Patent Document 2] JP-A-61-141741
[Patent Document 3] JP-B-49-36957
[Patent Document 4] JP-B-52-5071
[Patent Document 5] JP-A-1-188501
[Patent Document 6] JP-A-5-230286
[Patent Document 7] JP-A-7-233217
[Patent Document 8] JP-A-2004-51869

JP 2001158835 (A) describes a composition containing (A) a rubber component containing modified conjugated diene polymer produced by reacting an aminohydrocarbyloxysilane compound to a polymerization active terminal of a conjugated diene polymer, (B) silica and (C) at least one kind of a t-amine or its fatty acid salt or secondary amine.

JP 2001114939 (A) relates to modified butadiene rubber compositions obtained by incorporating silica and silane coupling agent into rubber component containing modified butadiene rubber which have been obtained by modifying a butadiene rubber obtained by the polymerization of butadiene with the use of a catalyst composed of a cobalt compound, an organoaluminum compound, and water with an alkoxy group-containing organic silicon compound and a silicon content derived from the modifier.

EP 0644235 (A1) relates to a sulfur cured rubber composition composed of an epoxidized rubber, a silica filler, a silica coupling agent, and a rubber selected from the group consisting of medium vinyl polybutadiene, styrene-butadiene rubber, synthetic cis-1,4-polyisoprene, synthetic 3,4-polyisoprene, natural rubber, cis-polybutadiene, styrene-isoprene rubber, styrene-isoprene-butadiene rubber, acrylonitrile-butadiene rubber and mixtures thereof.

JP 2001106830 (A) describes a rubber composition containing a diene rubber (a), silica (b), compatibilizer (c). The compatibilizer (c) is selected from (1) an aminosilane compound; (2) an epoxy-containing compound; (3) a compound having any one of a hydroxyl group, an epoxy group, an ether bond, a carboxyl group, an ester bond, and a polymerizable unsaturation and an amino group in the molecule: (4) a compound having any one of a hydroxyl group, an epoxy group, an ether bond, a carboxyl group, and an ester bond and a polymerizable unsaturation in the molecule; (5) an ether-bondcontaining compound; and (6) a carboxylate.

EP 1479698 (A1) disclosed are a method for producing a modified conjugated diene polymer includeing a step of modifying an active end of an active end-containing conjugated diene polymer with an alkoxysilane compound containing at least one functional group selected from the group consisting of (a) an epoxy group, (b) an isocyanate group and (c) a carboxyl group.

EP 1484359 (A1) describes a rubber composition comprising silica and/or carbon black. The rubber component contains a modified epoxidized natural rubber obtained by reacting epoxidized natural rubber with a compound selected from the group consisting of a Lewis acid, an amine compound, a thiol compound, an amide compound and an imidazole compound to conduct ring opening of an epoxy group.

JP 2004051869 (A) relates to a rubber composition containing to 100 pts.wt. of a rubbery polymer (A), 0.01-30 pts.wt. of a primary amine compound (B) having a tertiary carbon, 10-150 pts.wt. of an inorganic filler (C), and 0-20 pts.wt. of a silane coupling agent (D).

### DISCLOSURE OF THE INVENTION

The present invention provides a rubber composition which contains silica and exhibits excellent scorching properties, rolling resistance, and wet skid properties as compared with known rubber compositions, and a tire using the rubber composition.

The present invention has been achieved based on the following finding and idea. When using silica in a rubber composition as a filler, the dispersibility of silica in rubber is improved by kneading silica and rubber having a functional group which can interact or form a chemical bond with a silanol group (Si-OH group) on the surface of silica. On the other hand, since silica easily aggregates, reaggregation or the like occurs during kneading. Therefore, it is difficult to sufficiently disperse silica by this method.

The present inventors have found that the dispersibility of silica can be further improved by adding a component which can suppress reaggregation of silica, specifically, a component which can cover the surface of silica, whereby the performance of rubber can be improved. The present inventors have also found that an aliphatic component having a specific functional group is very effective as such a component and that all the properties of rubber are improved by adding such an aliphatic component in a specific amount. It is expected that adsorption of a vulcanizing agent on silica is suppressed by covering the surface of silica.

Specifically, the present invention provides a rubber composition comprising: (A) a rubber component including 30 to 100 mass% of diene rubber including a primary amino group and an alkoxysilyl group, in an amount of to 5.0 mmol per 100 g of the diene rubber; (B) silica in an amount of 5 to 130 parts by mass per 100 parts by mass of the rubber component; and (C) an aliphatic component having at least one functional group selected from the group consisting of a carboxyl group, a hydroxyl group, an amino group, and an epoxy group in an amount of 1 to 15 parts by mass per 100 parts by mass of the silica, and a tire using the rubber composition for a tread . Preferred embodiments are depicted in the dependent claims.

In the present invention, a copolymer of styrene and butadiene is preferable as the diene rubber. In particular, a copolymer which includes 5 to 45 mass% of a styrene unit and a butadiene unit having a 1,2-bond content of 10 to 80% and has a glass transition temperature of -70 to -10°C is more preferable. It is preferable that the copolymer have an alkoxysilyl group. It is also preferable that the rubber composition comprise carbon black in an amount of 2 to 100 parts by mass per 100 parts by mass of the rubber component (A).

The dispersibility of silica in the rubber component can be further improved, and scorching properties, rolling resistance, and wet skid properties can be improved by incorporating the aliphatic component (C) having a specific functional group into the rubber composition using the functional group-containing diene rubber as the rubber component (A) and silica as the filler (B).

### BRIEF DESCRIPTION OF THE DRAWING

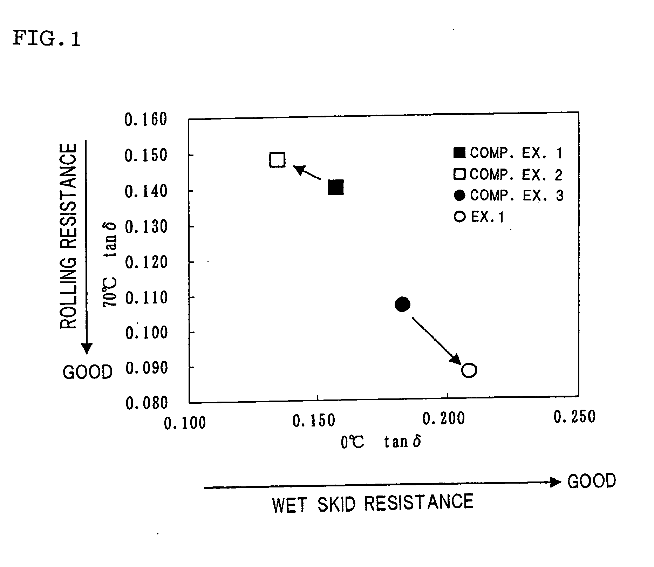

FIG 1 is a graph showing results of the examples.

### BEST MODE FOR CARRYING OUT THE INVENTION

Embodiments of the present invention are described below in detail. Note that the present invention should not be construed as being limited to the following embodiments, and various modifications, improvements, and the like may be made within the scope of the present invention based on the common knowledge of a person skilled in the art.

### (A) Rubber component

The rubber component (A) of the present invention includes 30 to 100 mass% of (A1) diene rubber having at least one functional group selected from the group consisting of an amino group, an alkoxysilyl group, an epoxy group, a hydroxyl group, and a carboxyl group in an amount of 0.01 to 5.0 mmol per 100 g of the diene rubber.

As the diene rubber (A1), a diene (co)polymer such as styrene-butadiene rubber, butadiene rubber, or isoprene rubber, natural rubber, is preferably used.

As examples of the diene monomer component forming the diene (co)polymer, 1,3-butadiene, isoprene, 2,3-dimethyl-1,3-butadiene, 2-chloro-1,3-butadiene, 1,3-pentadiene, mixtures thereof, can be given. As examples of an aromatic vinyl compound which may be used in combination with the diene mononer component, styrene, 2-methylstyrene, 3-methylstyrene, 4-methylstyrene, α-methylstyrene, 2,4-dimethylstyrene, 2,4-diisopropylstyrene, 4-tert-butylstyrene, divinylbenzene, tert-butoxystyrene, vinylbenzyldimethylamine, (4-vinylbenzyl)dimethyl aminoethyl ether, N,N-dimethylaminoethylstyrene, vinylpyridine, mixtures thereof, can be given. Of these, styrene is particularly preferable.

As examples of a third monomer, acrylonitrile, methyl methacrylate, ethyl methacrylate, methyl acrylate, ethyl acrylate, hydroxyethyl methacrylate, and hydroxyethyl acrylate can be given.

As examples of such a diene (co)polymer, copolymers having an aromatic vinyl compound unit content of 5 to 45 mass%, and preferably 10 to 40 mass% of the copolymer, a conjugated diene unit content of 55 to 95%, and preferably 60 to 90 mass% of the copolymer, a copolymerizable third monomer unit content of 0 to 25 mass% of the copolymer, and a 1,2-bond content of 10 to 80 mol%, preferably 30 to 75 mol%, and more preferably 35 to 65 mol% of the diene unit can be given.

If the content of the aromatic vinyl compound bonded to the polymer chain (i.e. aromatic vinyl compound unit content) is less than 5 mass%, wet skid resistance, abrasion resistance, and breaking properties may be decreased. If the content is 45 mass% or more, the balance between hysteresis loss and wet skid resistance tends to deteriorate. If the 1,2-bond content is less than 10 mol% of the diene unit, the balance between hysteresis loss and wet skid resistance tends to deteriorate. If the 1,2-bond content exceeds 80 mol%, productivity tends to be decreased when using a known method of synthesizing a copolymer of an aromatic vinyl compound and a conjugated diene.

The diene rubber of the present invention includes at least a primary amino group and an alkoxysilyl group in an amount of 0.01 to 5.0 mmol, preferably 0.05 to 2.0 mmol, and more preferably 0.1 to 1.0 mmol per 100 g of the diene rubber. The presence of such a functional group allows interaction such as reaction to occur between the surface of silica (filler) and the functional group, whereby the dispersibility of silica can be improved. If the amount of functional group is too small, the effect of improving the dispersibility of silica is reduced to a large extent. If the amount of functional group is too large, since an improvement effect proportional to the amount of functional group cannot be obtained, it is disadvantageous from the economical point of view. There are no specific limitations to the position of the functional group. The functional group may be positioned at the terminal of the diene rubber, or may be positioned at a location other than the terminal.

A preferred method of producing the above diene rubber is described below. A polymerization reaction for obtaining the above diene rubber is normally performed at a temperature of 0 to 120°C. The polymerization reaction may be performed under constant temperature conditions or while increasing the temperature. The polymerization method may be a batch polymerization method or a continuous polymerization method.

It is preferable to use an organic alkali metal and an organic alkaline earth metal as a polymerization initiator. As examples of the organic alkali metal and the organic alkaline earth metal, alkyllithium such as n-butyllithium, sec-butyllithium, and t-butyllithium, alkylenedilithium such as 1,4-dilithiobutane, phenyllithium, stilbene lithium, barium stearate, can be given.

The organic alkali metal as the initiator may be used to copolymerize the conjugated diene and the aromatic vinyl compound as a reaction product with a secondary amine compound or a tertiary amine compound. As the organic alkali metal which is reacted with the secondary amine compound or the tertiary amine compound, an organic lithium compound is preferable. It is more preferable to use n-butyllithium or sec-butyllithium.

As examples of the secondary amine compound reacted with the organic alkali metal, dimethylamine, diethylamine, dipropylamine, di-n-butylamine, di-sec-butylamine, dipentylamine, dihexylamine, di-n-octylamine, di-(2-ethylhexyl)amine, dicyclohexylamine, N-methylbenzylamine, diallylamine, morpholine, piperazine, 2,6-dimethylmorpholine, 2,6-dimethylpiperazine, 1-ethylpiperazine, 2-methylpiperazine, 1-benzylpiperazine, piperidine, 3,3-dimethylpiperidine, 2,6-dimethylpiperidine, 1-methyl-4-(methylamino)piperidine, 2,2,6,6-tetramethylpiperidine, pyrrolidine, 2,5-dimethylpyrrolidine, azetidine, hexamethyleneimine, heptamethyleneimine, 5-benzyloxyindole, 3-azaspiro[5,5]undecane, 3-azabicyclo[3,2,2]nonane, carbazole, can be given.

As the tertiary amine compound reacted with the organic alkali metal, N,N-dimethyl-o-toluidine, N,N-dimethyl-p-toluidine, N,N-dimethyl-m-toluidine, α-picoline, β-picoline, γ-picoline, benzyldimethylamine, benzyldiethylamine, benzydipropylamine, benzyldibutylamine, (o-methylbenzyl)dimethylamine, (m-methylbenzyl)dimethylamine, (p-methylbenzyl)dimethylamine, N,N-tetramethylene-o-toluidine, N,N-heptamethylene-o-toluidine, N,N-hexamethylene-o-toluidine, N,N-trimethylenebenzylamine, N,N-tetramethylenebenzylamine, N,N-hexamethylenebenzylamine, N,N-tetramethylene(o-methylbenzyl)amine, N,N-tetramethylene(p-methylbenzyl)amine, N,N-hexamethylene(o-methylbenzyl)amine, N,N-hexamethylene(p-methylbenzyl)amine, can be given.

An ether compound such as diethyl ether, di-n-butyl ether, ethylene glycol diethyl ether, ethylene glycol dibutyl ether, diethylene glycol dimethyl ether, propylene glycol dimethyl ether, propylene glycol diethyl ether, propylene glycol dibutyl ether, tetrahydrofuran, 2,2- (tetrahydrofurfuryl)propane, bistetrahydrofurfurylformal, methyl ether of tetrahydrofurfuryl alcohol, ethyl ether of tetrahydrofurfuryl alcohol, butyl ether of tetrahydrofurfuryl alcohol, α-methoxytetrahydrofuran, dimethoxybenzene, or dimethoxyethane and/or a tertiary amine compound such as triethylamine, pyridine, N,N,N',N'-tetramethylethylenediamine, dipiperidinoethane, methyl ether of N,N-diethylethanolamine, ethyl ether of N,N-diethylethanolamine, or butyl ether of N,N-diethylethanolamine may optionally be added to the polymerization system to adjust the microstructure (1,2-bond content) of the diene portion of the diene (co)polymer.

As examples of a hydrocarbon solvent used when polymerizing the diene (co)polymer, pentane, hexane, heptane, octane, methylcyclopentane, cyclohexane, benzene, toluene, xylene, can be given. Of these, cyclohexane and heptane are preferable.

In order to improve the reactivity of the initiator during polymerization or to randomly arrange the aromatic vinyl compounds introduced into the polymer or form a single chain of the aromatic vinyl compound, a potassium compound may be added in combination with the polymerization initiator. As the potassium compound which may be added in combination with the polymerization initiator, a potassium alkoxide or a potassium phenoxide such as potassium isopropoxide, potassium-t-butoxide, potassium-t-amyloxide, potassium-n-heptaoxide, potassium benzyl oxide, or potassium phenoxide; a potassium salt of isovalerianic acid, caprylic acid, lauric acid, palmitic acid, stearic acid, oleic acid, linolenic acid, benzoic acid, phthalic acid, 2-ethylhexanoic acid, or the like; a potassium salt of an organic sulfonic acid such as dodecylbenzenesulfonic acid, tetradecylbenzenesulfonic acid, hexadecylbenzenesulfonic acid, or octadecylbenzenesulfonic acid; a potassium salt of an organic phosphorous acid partial ester such as diethyl phosphite, diisopropyl phosphite, diphenyl phosphite, dibutyl phosphite, or dilauryl phosphite, is used.

These potassium compounds may be added in an amount of 0.005 to 0.5 mol per gram atomic equivalent of the alkali metal or the alkaline earth metal as the initiator. If the amount of the potassium compound is less than 0.005 mol, the effects of adding the potassium compound (improvement of the reactivity of the initiator, random arrangement of the aromatic vinyl compounds, or formation of a single chain of the aromatic vinyl compound) may not be obtained. If the amount exceeds 0.5 mol, polymerization activity is decreased to significantly decrease productivity. Moreover, modification efficiency when modifying the polymer terminal with the functional group is decreased.

A diene (co)polymer suitable for the present invention is produced by functionalizing the diene (co)polymer polymerized as described above. There are no specific limitations to the functionalization method. For example, the functional group may be introduced by polymerizing the diene (co)polymer using a polymerization initiator having a functional group or reacting an unsaturated monomer having a functional group. When polymerizing the diene (co)polymer as described above, it is preferable to introduce the functional group by reacting a coupling agent or a modifier having a functional group with the active site of the diene (co)polymer, for example.

As examples of the coupling agent or the modifier reacted with the active polymer terminal, at least one compound selected from the group consisting of (a) isocyanate compounds and/or isothiocyanate compounds, (b) amide compounds and/or imide compounds, (c) pyridyl-substituted ketone compounds and/or pyridyl-substituted vinyl compounds, (d) silicon compounds, (e) ester compounds, and (f) ketone compounds can be given.

As preferred examples of the isocyanate compounds or thioisocyanate compounds (component (a)), 2,4-tolylene diisocyanate, 2,6-tolylene diisocyanate, diphenylmethane diisocyanate, polymeric-type diphenylmethane diisocyanate (C-MDI), isophorone diisocyanate, hexamethylene diisocyanate, 1,3,5-benzene triisocyanate, phenyl-1,4-diisothiocyanate, can be given.

As preferred examples of the amide compounds or imide compounds (component (b)), amide compounds such as succinamide, phthalamide, N,N,N',N'-tetramethylphthalamide, oxamide, N,N,N',N'-tetramethyloxamide and imide compounds such as succinimide, N-methylsuccinimide, maleimide, N-methylmaleimide, phthalimide, and N-methylphthalimide can be given.

As preferred examples of the pyridyl-substituted ketone compounds or pyridyl-substituted vinyl compounds (component (c)), dibenzoylpyridine, diacetylpyridine, divinylpyridine, can be given.

As preferred examples of the silicon compounds (component (d)), triethoxymethylsilane, triphenoxymethylsilane, trimethoxysilane, 4,5-epoxyheptylmethyldimethoxysilane, bis(triethoxysilylpropyl)tetrasulfide, N,N-bis(trimethylsilyl)aminopropylmethyldimethoxysilane, tetraethoxysilane, diethoxydimethylsilane, tetramethoxysilane, dimethoxysilane, can be given.

As preferred examples of the ester compounds (component (e)), diethyl adipate, diethyl malonate, diethyl phthalate, diethyl glutarate, diethyl maleate, and the can be given.

As preferred examples of the ketone compounds (component (f)), N,N,N',N'-tetramethyl-4,4'-diaminobenzophenone, N,N,N',N'-tetraethyl(4,4'-diamino)-benzophenone, N,N-dimethyl-1-aminobenzoquinone, N,N,N',N'-tetramethyl-1,3-diaminobenzoquinone, N,N-dimethyl-1-aminoanthraquinone, N,N,N',N'-tetramethyl-1,4-diaminoanthraquinone, can be given.

These compounds which are reacted with the active polymer terminal may be used either individually or in combination of two or more.

It is preferable that the diene rubber used as the component (A) have a Mooney viscosity (ML₁₊₄, 100°C) of 20 to 200. If the Mooney viscosity is less than 20, breaking strength, abrasion resistance, and low hysteresis loss properties tend to be decreased. If the Mooney viscosity exceeds 200, processability tends to be decreased. A polymer having a Mooney viscosity (ML₁₊₄, 100°C) exceeding 100 is not preferable due to poor processability. However, such a polymer may be used without processability problems by decreasing the Mooney viscosity to 100 or less by adding an extender oil such as aromatic process oil or naphthenic process oil or a liquid polymer having a mass average molecular weight of 150,000 or less. The extender oil used is not particularly limited insofar as the extender oil is an extender oil or a softener normally used for diene rubber. An extender oil based on mineral oil is preferably used. The extender oil based on mineral oil is generally a mixture of aromatic oil, alicyclic oil, and aliphatic oil. The extender oil is classified into aromatic oil, alicyclic oil, and aliphatic oil depending on the ratio of these oils. Any of these oils may be used. In particular, aromatic mineral oil (aromatic oil) with a viscosity gravity constant (VGC) of 0.900 to 1.049 and an aliphatic mineral oil (naphthenic oil) with a viscosity gravity constant of 0.800 to 0.899 are preferably used with respect to low hysteresis properties/wet skid resistance. It is preferable to add the extender oil in an amount of 10 to 100 parts by mass per 100 parts by mass of the diene rubber.

The polymerization solution containing the diene rubber obtained as described above is processed using a method utilized for a normal solution polymerization method, such as adding a stabilizer or the like to the solution, optionally adding an extender oil (e.g. aromatic process oil or naphthenic process oil) or a liquid polymer with a mass average molecular weight of 150,000 or less (or a solution of the above liquid polymer), separating the rubber from the solvent using a direct drying method or a steam stripping method, washing the rubber, and drying the resulting product using a vacuum dryer, a hot-air dryer, or a roller, to isolate the target diene rubber.

The rubber composition of the present invention may include a rubber component other than the functional group-containing diene rubber. As examples of such a rubber component, natural rubber, butadiene rubber, isoprene rubber, styrene-butadiene rubber, can be given.

### (B) Silica

As examples of the silica used in the present invention, wet process silica, dry process silica, synthetic silicate-type silica, and the like can be given. Silica with a small particle diameter exhibits excellent reinforcing effects. Silica which has a small particle diameter and is highly aggregative (i.e. large surface area and high oil absorption) is preferable with respect of properties and processability due to excellent dispersibility in rubber. The average particle diameter (primary particle diameter) of the silica is preferably 5 to 60 µm, and more preferably 10 to 35 µm. The specific surface area (BET method) of the silica is preferably 45 to 280 m²/g.

The silica is added in an amount of 5 to 130 parts by mass, preferably 10 to 100 parts by mass, and more preferably 20 to 90 parts by mass per 100 parts by mass of the rubber component (A). If the amount of silica is too small, abrasion resistance tends to be decreased. If the amount of silica is too great, hysteresis loss tends to be increased.

Carbon black may be added in combination with silica. As the carbon black, carbon black produced by a furnace method and having a nitrogen adsorption specific surface area of 50 to 200 m²/g and a DBP absorption of 80 to 200 ml/100 g is preferable. As examples of such a carbon black, FEF, HAF, ISAF, and SAF carbon black can be given. In particular, highly aggregative carbon black is preferable.

The carbon black is added in an amount of preferably 2 to 100 parts by mass, and more preferably 5 to 90 parts by mass per 100 parts by mass of the rubber component (A). The silica/carbon black mass ratio is preferably 10/90 to 90/10, and more preferably 20/80 to 80/20. When using silica and carbon black in combination, these fillers exhibiting reinforcing effects are uniformly and finely dispersed in the rubber to produce a rubber composition which exhibits excellent roll formability and extrudability, provides excellent rolling resistance due to a reduction in hysteresis loss of vulcanized rubber, improves wet skid resistance, and exhibits excellent abrasion resistance.

A carbon-silica dual phase filler may be additionally used. The effects of improving rolling resistance can be further increased by additionally using the carbon-silica dual phase filler. The carbon-silica dual phase filler is silica-coated carbon black obtained by causing silica to be chemically bonded to the surface of carbon black, and is commercially available from Cabot Co., Ltd. under the trade names of CRX2000, CRX2002, and CRX2006.

A filler other than those described above may also be added. There are no specific limitations to the filler additionally used. For example, clay, calcium carbonate, aluminum oxide, magnesium carbonate, can be given.

### (C) Aliphatic component

The aliphatic component used in the rubber composition of the present invention has at least one functional group selected from the group consisting of a carboxyl group, a hydroxyl group, an amino group, and an epoxy group. As specific examples of such a compound, the following compounds can be given.

Carboxyl group-containing aliphatic component: stearic acid, lauric acid, oleic acid, palmitic acid, octyl acid, Hydroxyl group-containing aliphatic component: aliphatic alcohol such as pentanol, hexanol, and octanol; aromatic alcohol such as benzyl alcohol, p-chloro-benzyl alcohol; alicyclic alcohol such as cyclohexanol, 4-methyl-cyclohexanol, and cyclopentanol; heterocyclic alcohol such as furfuryl alcohol; polyhydric alcohol such as ethylene glycol and glycerol;
Amino group-containing aliphatic component: octylamine, laurylamine, myristylamine, stearylamine, cocoalkylamine, oleylamine, beef tallow alkylamine, Epoxy group-containing aliphatic component: olefin oxide, glycidyl ether, glycidyl ester.

Of these, an aliphatic acid such as stearic acid, octylamine, laurylamine, myristylamine, stearylamine, cocoalkylamine, oleylamine, and beef tallow alkylamine are preferable, with stearic acid being particularly preferable.

The aliphatic component (C) is added in an amount of 3 to 15 parts by mass, preferably 4 to 11 parts by mass, more preferably 4 to 10 parts by mass, and particularly preferably 4 to 9 parts by mass per 100 parts by mass of the silica. If the amount of the aliphatic component is too small, the effects of improving the rubber properties such as scorching properties, rolling resistance, and wet skid properties are decreased to a large extent. If the amount of the aliphatic component is too great, abrasion resistance is decreased.

### Other additives

A vulcanizing agent may be added to the rubber composition of the present invention in an amount of preferably 0.5 to 10 parts by mass, and more preferably 1 to 6 parts by mass per 100 parts by mass of the rubber component (A). As examples of the vulcanizing agent, sulfur, a sulfur-containing compound, a peroxide, can be given.

A sulfeneamide vulcanization accelerator, a guanidine vulcanization accelerator, a thiuram vulcanization accelerator, or the like may be used in combination with the vulcanizing agent in an appropriate amount. Zinc oxide, vulcanization auxiliaries, aging preventives, processing aids, may be added in an appropriate amount.

A coupling agent may be added to the rubber composition in order to improve the reinforcing effects of the filler.
As examples of the coupling agent, a silane coupling agent, bis(triethyoxysilylpropyl) tetrasulfide, bis(triethoxysilylpropyl) disulfide, and bis(triethoxysilylpropyl) monosulfide can be given.

The term "coupling agent" used herein refers to a compound having a component which can react with the surface of silica and a component which can react with rubber (particularly carbon-carbon double bond), such as a polysulfide group, a mercapto group, or an epoxy group, in its molecule.

As specific examples of the silane coupling agent, bis-(3-triethoxysilylpropyl) tetrasulfide, bis-(3-triethoxysilylpropyl) disulfide, bis-(2-triethoxysilylethyl) tetrasulfide, 3-mercaptopropyltrimethoxysilane, 3-triethoxysilylpropyl-N,N-dimethylthiocarbamoyl tetrasulfide, 3-triethoxysilylpropylbenzothiazole tetrasulfide, can be given.

The coupling agent is added in an amount of preferably 1 to 15 parts by mass, and more preferably 5 to 10 parts by mass per 100 parts by mass of the silica. If the amount of the coupling agent is too small, the effect of addition may be insufficient. If the amount of the coupling agent is too great, since an effect proportional to the amount of addition may not be obtained, it is disadvantageous from an economical point of view.

Components such as an extender oil, a filler, a vulcanizing agent, a vulcanization accelerator, and an aging preventive may be added to the above rubber.

### (1) Extender oil

As the extender oil, a commonly used rubber extender oil may be used without specific limitations. As examples of the extender oil, a naphthenic extender oil, a paraffin extender oil, an aromatic extender oil, can be given. Of these, an aromatic extender oil is preferable. A naphthenic or paraffin rubber extender oil may be used in combination with an aromatic extender oil.

### (2) Vulcanizing agent

As examples of the vulcanizing agent used in the present invention, sulfur; peroxides such as di-t-butyl peroxide; sulfur donor compounds such as tetramethylthiuram disulfide; can be given. In particular, sulfur is preferable from the viewpoint of durability. The vulcanizing agent is added in an amount of preferably 0.5 to 5 parts by mass per 100 parts by mass of the total rubber component.

### (3) Vulcanization accelerator

As examples of the vulcanization accelerator used in the present invention, diphenyl guanidine, N-tert-butyl-2-benzothiazolesulfeneamide, N-cyclohexyl-2-benzothiazolesulfeneamide, can be given. The vulcanizing agent is added in an amount of preferably 1 to 5 parts by mass per 100 parts by mass of the total rubber component.

### (4) Aging preventive

As examples of the aging preventive used in the present invention, N-phenyl-N'-isopropyl-p-phenylenediamine, N-(1,3-dimethylbutyl)-N'-phenyl-p-phenylenediamine, can be given. The aging preventive is added in an amount of preferably 1 to 10 parts by mass per 100 parts by mass of the total rubber component.

### (5) Other compounding ingredients

As other compounding ingredients used in the present invention, processing aids such as stearic acid, Zinc oxide, and wax, tackifiers, can be given.

The above-described rubber component (A), the silica (B), the functional group-containing aliphatic component (C), and optional additives are kneaded at a temperature of 140 to 180°C using a kneader such as a Banbury mixer. After cooling the resulting mixture, a vulcanizing agent such as sulfur, a vulcanization accelerator, and the like are mixed with the mixture using a Banbury mixer or a mixing roll to prepare rubber for vulcanization. After forming the rubber into a desired shape, the resulting product is vulcanized at a temperature of 140 to 180°C to obtain vulcanized rubber (i.e. rubber product) with an arbitrary shape.

The rubber composition of the present invention and vulcanized rubber using the rubber composition are suitably used for tire applications such as a tread, rubber wall, and rubbing strip, and may also be suitably used for industrial products such as a belt, hose, vibration-proof rubber, and footwear. The rubber composition is particularly suitably used for a tire tread.

### EXAMPLES

The present invention is described below in more detail by way of examples, which should not be construed as limiting the present invention. In the examples, "part" and "%" respectively indicate "part by mass" and "mass%" unless otherwise specified.

In the examples, various items were measured according to the following methods.
(1) Bonded styrene content: measured by 270 MHz ¹H-NMR.
(2) 1,2-bond content of butadiene portion: measured by 270 MHz ¹H-NMR.
(3) Mooney viscosity (ML₁₊₄, 100°C): measured according to JIS K6300 using an L rotor at a preheating time of one minute, a rotor operation time of four minutes, and a temperature of 100°C.
(4) Scorching properties: a change in torque was measured at 160°C for 40 minutes using a curelastometer, and the time at which the torque became 10% of the maximum torque (t(10)) and the time at which the torque became 90% of the maximum torque (t(90)) were determined.

(5) Evaluation of properties of vulcanized rubber
(a) Abrasion resistance: measured according to JIS K6264 using a DIN abrasion resistance tester. The measured values are used as indices. The larger the value, the better the abrasion resistance.
(b) ARES temperature dispersibility: tanδ at 50°C was measured using a dynamic analyzer (RDA) manufactured by Rheometrix of the U. S.A. at a dynamic strain of 1%, a frequency of 10 Hz , and a temperature of 50°C. The smaller the value, the lower the rolling resistance (low rolling resistance). tanδ at 0°C was measured using the same instrument at a dynamic strain of 0.5%, a frequency of 10 Hz, and a temperature of 0°C. The larger the value, the better the wet skid properties (high wet skid resistance).

### Reference Example 1 (synthesis of SBR-1)

A 5 l autoclave reaction vessel of which the internal atmosphere was replaced with nitrogen was charged with 2750 g of cyclohexane, 40.3 g of tetrahydrofuran, 125 g of styrene, and 365 g of 1,3-butadiene. After adjusting the temperature of the contents of the reaction vessel to 20°C, 3.92 mmol of n-butyllithium was added to initiate polymerization. The components were polymerized under thermally-insulated conditions, and the maximum temperature reached 85°C. When the polymerization conversion rate reached 99%, 10 g of butadiene was added and polymerized for five minutes. After the addition of 1560 mg of N,N-bis(trimethylsilyl)aminopropylmethyldimethoxysilane, the components were reacted for 15 minutes. 2,6-Di-tert-butyl-p-cresol was added to the polymer solution after the reaction. The solvent was then removed by steam stripping, and the rubber was dried using a heat roll of which the temperature was adjusted to 110°C to obtain SBR-1. The molecular properties of the resulting SBR-1 are shown in Table 1.

### Reference Example 2 (synthesis of SBR-2)

A 5 l autoclave reaction vessel of which the internal atmosphere was replaced with nitrogen was charged with 2500 g of cyclohexane, 40.3 g of tetrahydrofuran, 125 g of styrene, and 365 g of 1,3-butadiene. After adjusting the temperature of the contents of the reaction vessel to 20°C, 3.92 mmol of n-butyllithium was added to initiate polymerization. The components were polymerized under thermally-insulated conditions, and the maximum temperature reached 85°C. After the polymerization conversion rate reached 100%, 10 g of butadiene was added and polymerized. 1.57 mmol of tin tetrachloride was then added to perform modification reaction for 15 minutes. After the addition of 2,6-di-tert-butyl-p-cresol to the polymer solution after the reaction, the solvent was removed by steam stripping, and the rubber was dried using a heat roll at 115°C to obtain SBR-2. The molecular properties of the resulting SBR-2 are shown in Table 1.

**[Table 1]**

| | SBR-1 | SBR-2 |
|---|---|---|
| Bonded styrene content (wt%) | 25 | 25 |
| 1,2-bond content of butadiene portion (%) | 60 | 60 |
| Amount of extender oil | 0 | 0 |
| Mooney viscosity | 50 | 78 |

### Example 1 and Comparative Examples 1 to 3

The above SBR and additives given below were mixed at a ratio shown in Table 2 using a 1.7 1 Banbury mixer to prepare rubber. The resulting rubber was vulcanized at 160°C for 30 minutes, and the properties of the vulcanized rubber were evaluated. The results are shown in Table 3 and FIG. 1.
BR: high-cis polybutadiene rubber manufactured by JSR Corporation
Silica: "Nipsil AQ" manufactured by Tosoh Silica Corporation
Coupling agent: "Si69" manufactured by Degussa Japan Co., Ltd.
Carbon black: "Diablack H" manufactured by Mitsubishi Chemical Corporation
Extender oil: "Fukkol Aromax #3" manufactured by Fuji Kosan Co., Ltd.
6C: "Nocrac 6C" manufactured by Ouchi Shinko Chemical Industrial Co., Ltd.
Stearic acid: "Lunac S-40" manufactured by Kao Corp.
CZ: "Nocceler CZ" manufactured by Ouchi Shinko Chemical Industrial Co., Ltd.
D: "Nocceler CZ" manufactured by Ouchi Shinko Chemical Industrial Co., Ltd.

**[Table 2]**

| Component | Comparative Example 1 | Comparative Example 2 | Comparative Example 3 | Example 1 |
|---|---|---|---|---|
| SBR-1 | | | 70 | 70 |
| SBR-2 | 70 | 70 | | |
| BR | 30 | 30 | 30 | 30 |
| Silica | 70 | 70 | 70 | 70 |
| Coupling agent | 5.6 | 5.6 | 5.6 | 5.6 |
| Extender oil | 37.5 | 37.5 | 37.5 | 37.5 |
| Carbon black | 5.6 | 5.6 | 5.6 | 5.6 |
| Stearic acid | 2 | 5 | 2 | 5 |
| 6C | 1 | 1 | 1 | 1 |
| Zinc oxide | 3 | 3 | 3 | 3 |
| CZ | 1.8 | 1.8 | 1.8 | 1.8 |
| D | 1.2 | 1.2 | 1.2 | 1.2 |
| Sulfur | 1.5 | 1.5 | 1.5 | 1.5 |

**[Table 3]**

| Properties | | Comparative Example 1 | Comparative Example 2 | Comparative Example 3 | Example 1 |
|---|---|---|---|---|---|
| Curelastometer (160°C x 40 min) V type | | | | | |
| | t_{c}(10) (min) | 5.9 | 6.5 | 5.4 | 8.4 |
| | t_{c}(90) (min) | 12.5 | 12.2 | 13.2 | 13.3 |
| DIN abrasion test (5N) | | | | | |
| | DIN abrasion loss (cm³) | 0.0822 | 0.0911 | 0.0699 | 0.0722 |
| | Index (No.) | 100 | 100 | 130 | 126 |
| ARES temperature dispersibility | | | | | |
| | 0°C tanδ | 0.157 | 0.135 | 0.183 | 0.208 |
| | 50°C tanδ | 0.145 | 0.155 | 0.113 | 0.097 |

As is clear from the results shown in Table 3 and FIG 1, wet skid resistance (tanδ at 0°C) and rolling resistance (tanδ at 70°C) deteriorated when using SBR-2 which did not have a functional group capable of interacting with the surface of silica and increasing the amount of stearic acid (component C) from 2 phr (2.9 parts by mass per 100 parts by mass of silica) (Comparative Example 1) to 5 phr (7.1 parts by mass per 100 parts by mass of silica) (Comparative Example 2). On the other hand, wet skid resistance (tanδ at 0°C) and rolling resistance (tanδ at 70°C) were improved when using SBR-1 having an alkoxysilyl group which is a functional group capable of interacting with the surface of silica and increasing the amount of stearic acid (component C) from 2 phr (2.9 parts by mass per 100 parts by mass of silica) (Comparative Example 3) to 5 phr (7.1 parts by mass per 100 parts by mass of silica) (Example 1). The rubber composition of Example 1 exhibited excellent scorching properties.

From the above results, it was found that a system using diene rubber including at least an primary amino group and an alkoxysilyl group (functional groups capable of interacting with the surface of silica) as the rubber component (A) and silica as the filler (B) exhibited improved rubber properties when a specific amount of aliphatic component having a specific functional group was added.

### INDUSTRIAL APPLICABILITY

The rubber composition of the present invention exhibits excellent scorching properties, rolling resistance, and wet skid properties and is useful as a tread material for low-fuel-consumption tires, large tires, and high-performance tires. A tire using the rubber composition for its tread exhibits excellent grip properties and low rolling resistance and is very useful in the automotive field.

## Claims

1. A rubber composition comprising:
(A) a rubber component including 30 to 100 mass% of diene rubber including a primary amino group and an alkoxysilyl group in an amount of 0.01 to 5.0 mmol per 100 g of the diene rubber;
(B) silica in an amount of 5 to 130 parts by mass per 100 parts by mass of the rubber component; and
(C) an aliphatic component having at least one functional group selected from the group consisting of a carboxyl group, a hydroxyl group, an amino group, and an epoxy group in an amount of 3 to 15 parts by mass per 100 parts by mass of the silica.

2. The rubber composition according to claim 1, wherein the primary amino group and the alkoxysilyl group included in the diene rubber are obtainable by modifying the active polymer terminal with N,N-bis(trimethylsilyl) aminopropylmethyldimethoxysilane.

3. The rubber composition according to claim 1 or 2, wherein the aliphatic component (C) is an aliphatic acid.

4. The rubber composition according claim 3, wherein the aliphatic acid is stearic acid.

5. The rubber composition according to any one of claims 1 to 4, comprising carbon black in an amount of 2 to 100 parts by mass per 100 parts by mass of the rubber component (A).

6. A tire wherein the rubber composition according to any one of claims 1 to 5 is used in a tread.

## Patentansprüche

1. Kautschukzusammensetzung, die umfasst:
(A) einen Kautschukbestandteil, der 30 bis 100 Massen-% eines Dienkautschuks beinhaltet, der eine primäre Aminogruppe und eine Alkoxysilylgruppe und eine Alkoxysilylgruppe in einer Menge von 0,01 bis 5,0 mmol pro 100 g des Dienkautschuks beinhaltet;
(B) Siliziumdioxid in einer Menge von 5 bis 130 Massenteilen pro 100 Massenteilen des Kautschukbestandteils; und
(C) einen aliphatischen Bestandteil mit zumindest einer funktionellen Gruppe ausgewählt aus der Gruppe bestehend aus einer Carboxylgruppe, einer Hydroxylgruppe, einer Aminogruppe und einer Epoxygruppe in einer Menge von 3 bis 15 Massenteilen pro 100 Massenteilen des Siliziumdioxids.

2. Kautschukzusammensetzung nach Anspruch 1, wobei die primäre Aminogruppe und die Alkoxysilylgruppe, die in dem Dienkautschuk beinhaltet sind, durch Modifizieren des aktiven Polymerterminus mit N,N-bis(Trimethylsilyl)aminopropylmethyldimethoxysilan erhältlich sind.

3. Die Kautschukzusammensetzung nach Anspruch 1 oder 2, wobei der aliphatische Bestandteil (C) eine aliphatische Säure ist.

4. Kautschukzusammensetzung nach Anspruch 3, wobei die aliphatische Säure Stearinsäure ist.

5. Kautschukzusammensetzung nach einem der Ansprüche 1 bis 4, die Kohlenstoffschwarz in einer Menge von 2 bis 100 Massenteilen pro 100 Massenteile des Kautschukbestandteils (A) umfasst.

6. Reifen, wobei die Kautschukzusammensetzung nach einem der Ansprüche 1 bis 5 in einem Profil verwendet wird.

## Revendications

1. Composition de caoutchouc comprenant :
(A) un composant caoutchouc incluant 30 à 100% en masse de caoutchouc diénique incluant un groupe amino primaire et un groupe alcoxysilyle dans une quantité de 0,01 à 5,0 mmol pour 100 g du caoutchouc diénique ;
(B) de la silice dans une quantité de 5 à 130 parties en masse pour 100 parties en masse du composant caoutchouc ; et
(C) un composant aliphatique ayant au moins un groupe fonctionnel choisi parmi le groupe consistant en un groupe carboxyle, un groupe hydroxyle, un groupe amino, et un groupe époxyde dans une quantité de 3 à 15 parties en masse pour 100 parties en masse de la silice.

2. Composition de caoutchouc selon la revendication 1, dans laquelle le groupe amino primaire et le groupe alcoxysilyle inclus dans le caoutchouc diénique peuvent être obtenus par modification de la terminaison polymère active avec du N,N-bis(triméthylsilyl)aminopropylméthyldiméthoxysilane.

3. Composition de caoutchouc selon la revendication 1 ou 2, dans laquelle le composant aliphatique (C) est un acide aliphatique.

4. Composition de caoutchouc selon la revendication 3, dans laquelle l'acide aliphatique est l'acide stéarique.

5. Composition de caoutchouc selon l'une quelconque des revendications 1 à 4, comprenant du noir de carbone dans une quantité de 2 à 100 parties en masse pour 100 parties en masse du composant caoutchouc (A).

6. Pneumatique dans lequel la composition de caoutchouc selon l'une quelconque des revendications 1 à 5 est utilisée dans une bande de roulement.
